Europäisches Patentamt

(19) European Patent Office

Office européen des brevets

(11) Publication number: **0 061 321**
**B1**

(12) **EUROPEAN PATENT SPECIFICATION**

(45) Date of publication of patent specification: **04.06.86**

(21) Application number: **82301427.9**

(22) Date of filing: **19.03.82**

(51) Int. Cl.⁴: **B 65 G 49/00,** G 01 G 13/00,
B 65 G 25/02

(54) **Method and apparatus for conveying linear articles.**

(30) Priority: **19.03.81 JP 41093/81**
**24.07.81 JP 116837/81**

(43) Date of publication of application:
**29.09.82 Bulletin 82/39**

(45) Publication of the grant of the patent:
**04.06.86 Bulletin 86/23**

(84) Designated Contracting States:
**DE FR GB IT**

(56) References cited:
**CH-A- 369 062**
**DE-A-3 026 059**
**DE-B-2 340 832**
**GB-A-1 013 130**
**US-A-2 925 166**
**US-A-3 974 888**

(73) Proprietor: **KABUSHIKI KAISHA ISHIDA KOKI**
**SEISAKUSHO**
**44, Shogoin Sannou-cho Sakyo-ku**
**Kyoto-shi Kyoto 606 (JP)**

(72) Inventor: **Sashiki, Takashi**
**10-46, Babamibashiri**
**Nagaokakyo-shi Kyoto (JP)**
Inventor: **Sakaeda, Keiko**
**1-20, Kinugasatakahashi-cho Kita-ku**
**Kyoto-shi Kyoto (JP)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

## Description

This invention relates to the conveyance of elongate articles, for example dried noodles which are aligned or oriented in a given direction.

An automatic weighing system which is known in the art relies upon a combination computing function. Compared with the older automatic weighing apparatus which weighs articles on a single weighing machine while controlling the supply of articles to that weighing machine, the combinatorial system can provide great accuracy and enable articles to be weighed out to a preset weight value in a short period of time.

The above-mentioned combinatorial automatic weighing system operates by measuring the weights of articles which have been fed to a plurality of weighing machines, forming all possible combinations of the actually measured weight values, with the number of weight values in each combination being either arbitrary or predetermined, adding the weight values in each combination, comparing each resulting sum with a predetermined target weight, and selecting the combination whose weight sum is equal or closest to the target weight. This particular combination of weights is referred to as the "best" combination.

The combinatorial automatic weighing system of the above type requires a conveyance apparatus in order to exploit its weighing function fully. Such an apparatus should distributively supply the plurality of weighing machines with the articles in good order and at an adequate speed, deliver the articles from any of the weighing machines that have been selected as belonging to the best combination, and provide a fresh supply of the articles to those weighing machines that have been emptied of their contents in the previous step.

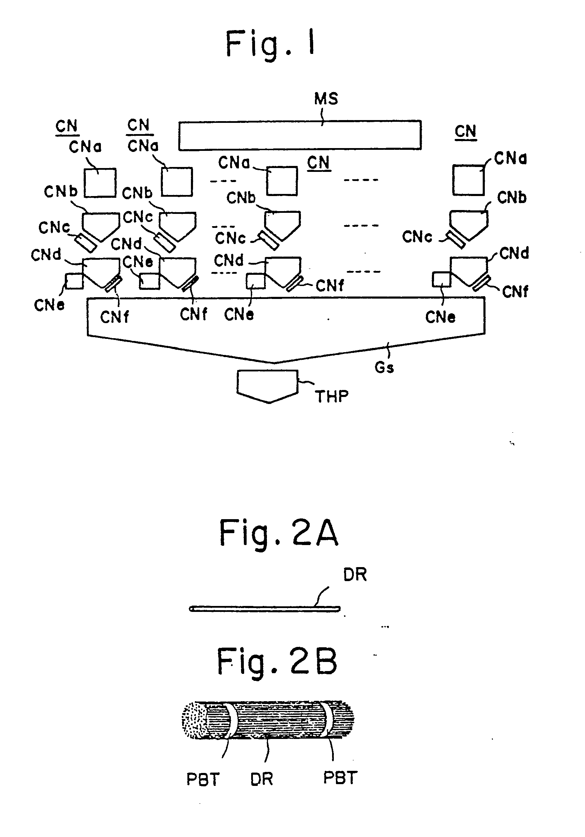

The conventional conveyance apparatus of this type makes use of a dispersing bowl or of radially extending troughs (GB—A—1013130). The latter is adopted in the combinatorial automatic weighing system shown schematically in Fig. 1 of the accompanying drawings, in which MS denotes a main feeder of the vibratory conveyance type, using the radially arrayed trough mentioned above. Articles to be weighed are introduced into the main feeder MS and subjected to vibratory motion so as to be dispersed radially outward from the centre thereof. CN, CN ... denote a number $n$ of weighing sections which are arranged around the main feeder MS along radially extending lines to receive the articles dispersed by the main feeder. Each weighing section CN includes a dispersing feeder $CN_a$, a holding vessel $CN_b$, a weighing hopper $CN_d$, a weight sensor $CN_e$, and a weighing hopper gate $CN_f$. The dispersing feeder $CN_a$ comprises an independently vibratable conveyance device for feeding the articles by means of vibration, or an independently operable shutter device for delivering the articles in batches. In either case, each dispersing feeder $CN_a$ is so

arranged that the articles received from the centrally located main feeder MS can be introduced into the corresponding holding $CN_b$ disposed therebelow. The holding vessel gate $CN_c$ is provided on each holding vessel $CN_b$ in such a manner that the articles received in the holding vessel are released into the weighing hopper $CN_d$ when the gate $CN_c$ is opened. Each weight sensor $CN_e$ is attached to the corresponding weighing hopper $CN_d$ and is operable to measure the weight of the articles introduced into the weighing hopper. The weight sensor $CN_e$ is adapted to supply a combination control unit (not shown) with an electric signal indicative of the measured weight. The combination control unit then selects the optimum combination of articles, i.e. the "best" combination, that gives a total weight closest to a target weight. Each of the weighing hopper gates $CN_f$ is provided on the corresponding weighing hopper $CN_d$. Only those weighing hopper gates $CN_f$ provided on weighing hoppers $CN_d$ that will give the best combination are opened. The articles from the weighing hoppers $CN_d$ selected in this manner fall through the open weighing hopper gates and are discharged into a common collecting chute GS where they are collected together. The collecting chute GS has the shape of a funnel and is so arranged as to receive the articles from any of the circularly arrayed weighing hoppers $CN_d$ via the hopper gates, which are located above the funnel substantially along its outer rim. The articles received by the collecting chute GS are collected at the centrally located lower end thereof by falling under their own weight or by being forcibly shifted along the inclined wall of the funnel by a mechanical scraper or the like, which is not shown. The collecting chute GS is provided with a timing hopper THP at the lower end thereof for temporarily holding the collected articles. The arrival of an externally applied signal for a packing device or the like causes the timing hopper THP to release the retained articles from the weighing apparatus.

In operation, the holding vessels $CN_b$ and weighing hoppers $CN_d$ initially contain a supply of the articles. The weight sensors $CN_e$ associated with the respective weighing hoppers $CN_d$ measure the weights of the articles in each hopper and produce weight values $W_1$ through $W_{10}$ which are sent to the combination control unit, not shown. The control unit performs an arithmetic combinatory control operation using the weight values $W_1$ through $W_{10}$ and selects the combination of articles that gives a total weight closest to the set target weight. A drive control unit (not shown) opens the weighing hopper gates $CN_f$ that are selected on the basis of the best combination, whereby the selected weighing hoppers deliver their articles to the collecting chute GS. Now the holding vessel gate $CN_c$ of those holding vessels $CN_b$ corresponding to the empty weighing hoppers $CN_d$ are opened to introduce a fresh supply of the articles into said weighing hoppers, leaving said holding vessels empty. Next, the dispersing feeders $CN_a$ which correspond to the empty holding vessels $CN_b$ are vibrated for a predetermined period of time to deliver a fresh supply of the articles to said holding vessels. This restores the weighing apparatus to the initial state to permit resumption of the control operation for selecting the best weight combination in the manner described. Thus, weighing by the combinatorial scale may proceed in continuous fashion repeating the foregoing steps.

The conventional conveyance apparatus used in the combinatorial weighing system described above distributes or disperses the articles radially outwardly from the sole main feeder consisting of the radially extending troughs. With such an arrangement, however, any orientation which the articles may possess is lost. This does not pose a problem in the conveyance of bulky products such as fruits, green peppers, potatoes and the like since these need not be oriented when conveyed. The problem arises in the conveyance of elongate or linear articles such as dried noodles which must all have a specific orientation in order to be packed correctly. Such articles lose their orientation when conveyed by the conventional apparatus and arrive at the packaging machine in a state of disarray.

An example of a linear article such as mentioned above is illustrated in Fig. 2A of the accompanying drawings, which shows a single dried noodle DR. In the packaging process a multiplicity of the dried noodles DR are bundled together by the paper bands PBT, as illustrated in Fig. 2B. It can be understood that such bundling involves major difficulties when the dried noodles are delivered to an automatic packaging apparatus in a randomly oriented manner.

United States Patent Specification A—2 925 166 (Sawdey) describes a conveyance apparatus for conveying elongate articles such as pipes in a desired direction whilst maintaining them in a predetermined orientation relative to that direction. A number of rests and retaining rollers provide a plurality of temporary storage receptacles, arrayed one after another in the said direction, and input means are provided for delivering respective quantities of such articles to the temporary storage receptacles in the said predetermined orientation. A transfer mechanism including lifting racks, which are movable alongside the array of temporary storage receptacles, is operable cyclically to take up the articles from the temporary storage receptacles and convey those articles therefrom in the said direction. However, each cycle of operation of this transfer mechanism effects a transference of all articles in the temporary storage receptacles and cannot be used to effect conveyance of articles from just a selected set of the temporary storage receptacles as is desired for use, for example, with a combinatorial weighing apparatus.

According to the present invention there is provided a conveyance apparatus, for conveying elongate articles in a desired direction whilst maintaining them in a predetermined orientation relative to that direction, comprising:

input means for delivering respective quantities of such articles, in the said predetermined orientation, to a plurality of temporary storage locations arrayed one after another in the said direction; and

a transfer mechanism including support means extending alongside the array of temporary storage locations and movable cyclically so that articles are taken up from those locations and conveyed in the said direction;

characterised in that a plurality of selectively actuable take-up devices are mounted on the said support means and arrayed therealong in the said direction so as to be carried upwardly past the respective temporary storage locations in the course of each operating cycle of the transfer mechanism, each of the take-up devices being individually switchable between an actuated condition, for engaging beneath such articles in a temporary storage location when carried upwardly past that location, and a non-actuated condition for avoiding such engagement, whereby each operating cycle of the transfer mechanism can be used to take up and convey such articles from an individually selected set of the temporary storage locations whilst leaving such articles in the non-selected temporary storage locations.

Reference will now be made, by way of example, to the accompanying drawings in which like reference characters designate the same or similar parts throughout the figures thereof, and in which:

Fig. 1 (described above) is a schematic diagram of a combination computing-type automatic weighing system;

Fig. 2A shows a perspective view of a single dried noodle;

Fig. 2B shows a perspective view of a multiplicity of dried noodles tied into a single cluster;

Fig. 3 shows a perspective view of a conveyance apparatus embodying the present invention;

Fig. 4A shows a diagrammatic side view of supply station parts of the conveyance apparatus of Fig. 3;

Fig. 4B shows a diagrammatic perspective view of dispensing station parts of the conveyance apparatus of Fig. 3;

Fig. 5 shows a plan view of portions of the dispensing station and of a holding station of the apparatus of Fig. 3;

Fig. 6 shows a side view corresponding to Fig. 5;

Fig. 7 shows a perspective view of a detail of the construction of the apparatus of Fig. 3;

Figs. 8 and 9 shown respectively a perspective view of an alternative form of the detail illustrated in Fig. 7 and a section through parts of that alternative form;

Fig. 10 shows a plan view of weighing station parts of the apparatus of Fig. 3;

Fig. 11 shows a side view corresponding to Fig. 10;

Fig. 12 shows a plan view illustrating further parts of the apparatus of Fig. 3;

Fig. 13 shows a diagrammatic side view illustrating operative paths of movement in the apparatus of Fig. 3;

Fig. 14 shows a plan view illustrating further details of the apparatus of Fig. 3;

Fig. 15 shows to a larger scale a detail of Fig. 14; and

Figs. 16 and 17 show diagrammatic plan and sectional side views of a second conveyance apparatus embodying the present invention.

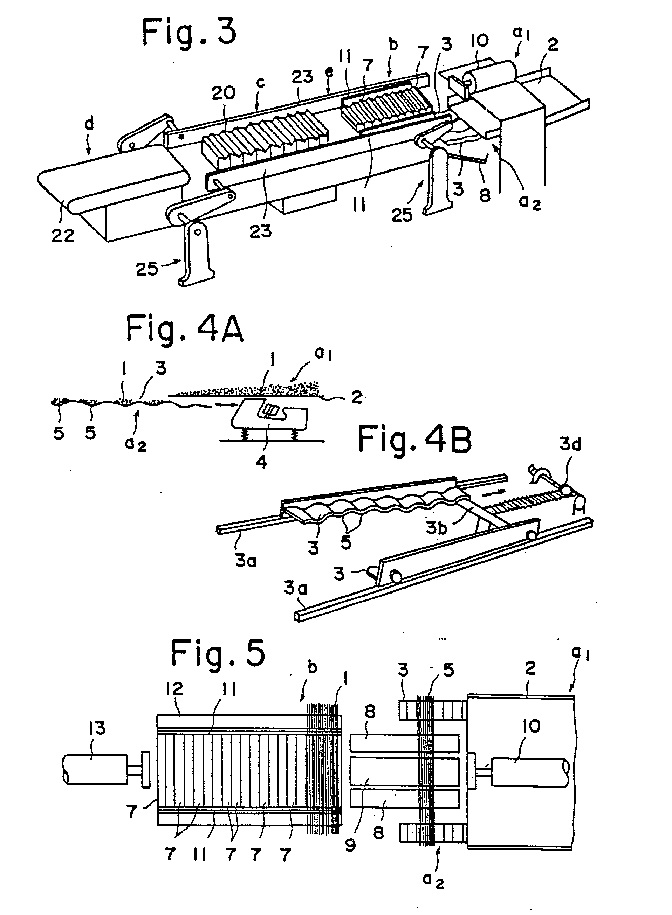

The conveyance apparatus of Fig. 3 comprises a supply station $a_1$ for supplying linear, or elongate articles arranged with a specific orientation, a dispensing station $a_2$ for randomly dispensing a required number of the oriented linear articles supplied by the supply station $a_1$, a holding station $b$ for aligning individual ones of the dispensed linear articles, a weighing station $c$ for weighing linear articles obtained from the holding station $b$ to perform a combinatorial weighing operation, a discharge station $d$ for delivering linear articles which have been weighed and selected by the weighing station $c$ to an automatic packaging machine or the like, and a selective conveyance station $e$ which is provided astride the holding station $b$, weighing station $c$ and discharge station $d$ for selectively delivering the linear articles from the holding station $b$ to the weighing station $c$ and from the weighing station $c$ to the discharge station $d$.

The supply station $a_1$ and dispensing station $a_2$ are shown in greater detail in Figs. 4A and 4B. The supply station $a_1$ includes a main trough 2 which conveys the necessary quantity of linear articles 1 by vibrating accordingly, and the dispensing station $a_2$ includes opposed corrugated supports 3, 3 for receiving the linear articles 1 from the main trough 2. The main trough 2 is set upon an ordinary electromagnetic feeder 4, as depicted in Fig. 4A, by which the trough is vibrated at the appropriate time to convey the linear articles. The supports 3, 3 have a plurality of corrugations 5, each of which serves to receive a quantity of the linear articles. More specifically, the corrugated supports 3, 3 are disposed below the front end of the main trough 2 and are moved back and forth in a suitable manner while the main trough 2 is vibrated, whereby each corrugation 5 in the corrugated supports 3, 3 receives an approximately equal quantity of the linear articles which fall from the front end of the main trough 2 as it is vibrated. It will be appreciated that the corrugated supports 3, 3 support the linear articles 1 at opposite ends thereof.

Fig. 4B illustrates the mechanism for moving the corrugated supports 3, 3 back and forth in the manner described above. The corrugated supports 3, 3 are mounted for free back-and-forth movement on respective rails 3a, 3a which are supported below the front end of the main trough. Specifically, the two corrugated supports 3, 3 are coupled to each other by a coupling rod 3b, and a rack 3c is connected to the coupling rod 3b. Engaging with the rack 3c is a pinion 3d reversibly rotatable by driving means such as a motor, not shown. Actuating the driving means to rotate the pinion in the forward and reverse directions causes the rack 3c to move the corrugated supports 3, 3 back and forth along the rails 3a, 3a in a prescribed manner, whereby the number of corrugations 5 that are necessary for distributing the desired amount of linear articles are made to project from the front or leading edge of the main trough 2.

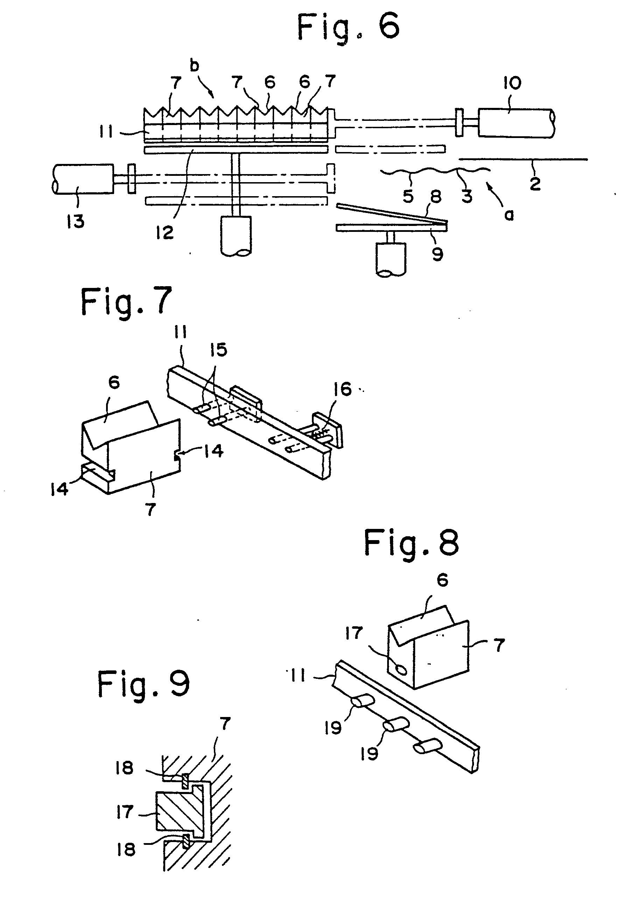

The holding station $b$, as illustrated in Figs. 5 and 6, comprises a plurality of temporary storage receptacles 7, arrayed one after another in the desired direction of conveyance and having each a V-shaped groove 6, and also comprises a pair of sloping members 8 for supporting the receptacles 7, a first elevator 9 for lifting the receptacles 7 supported on the sloping members 8, a first pushing device 10, such as a cylinder, for pushing forwardly the receptacles 7 lifted by the elevator 9, a pair of retaining plates 11 and a second elevator 12 which cooperate to retain the receptacles 7 pushed forward by the first pushing device 10, and a second pushing device 13, such as a cylinder, for pushing the receptacles 7 back onto the sloping members 8 from the second elevator 12 when the second elevator is in its lowered position. The receptacles 7 are so dimensioned as to be able to pass between the corrugated supports 3, 3 without striking them, and each receptacle 7 is disposed so as to correspond to one of the corrugations 5 of each corrugated support 3. The receptacles 7 when pushed back onto the sloping members 8 slide therealong under their own weight and are collected at the back thereof.

The first elevator 9, ordinarily situated below the pair of sloping members 8, is raised at a prescribed time between the pair of sloping members 8 and the pair of corrugated supports 3, 3 in order to lift the receptacles 7 from the sloping members 8 to a point above the corrugated supports 3, 3. The second elevator 12 ordinarily is raised to a point below the retaining plates 11 to underlie and thus support the receptacles 7 retained by the retaining plates. When the second elevator 12 is lowered, it carries with it only the receptacles 7 released by the retaining plates 11 in a manner described below, the receptacles 7 lowered by the second elevator 12 being returned to the sloping members 8 by the second pushing device 13, as mentioned above.

One example through which the temporary storage receptacles 7 may be retained by the retaining plates 11 is shown in Fig. 7. Each receptacle 7 has locking grooves 14, 14, extending in the direction of conveyance, formed at opposite end surfaces thereof. Fitted through holes provided in each of the retaining plates 11 are sets of retractable locking pins 15, 15, consisting of two locking pins each. The locking pin sets are provided at positions corresponding to respective ones of the receptacles 7 and, along with the retaining plates 11, are operatively coupled to electromagnetic solenoids, which are not shown. Energizing the solenoids drives the locking pins 15, 15 into engagement with the locking grooves 14, 14 of the receptacles 7 to retain them between the retaining plates 11. De-energizing the solenoid retracts the locking pins 15, 15 from engagement with the locking grooves 14, 14 by allowing respective springs 16 to urge them in the opposite direction, whereby the receptacles 7 are released from the retaining plates 11.

Another example of means for retaining the receptacles 7 is shown in Figs. 8 and 9. Here each receptacle 7 has a magnetic body 17 implanted in both ends thereof and held in place by retaining pins 18. Each retaining plate 11 is provided with electromagnetic coils 19 at positions corresponding to respective ones of the receptacles 7, particularly their magnetic bodies 17. Energizing the electromagnetic coils 19 attracts the opposing magnetic bodies 17 to retain the respective receptacles 7 in place on the retaining plates 11; de-energizing the coils releases the receptacles 7.

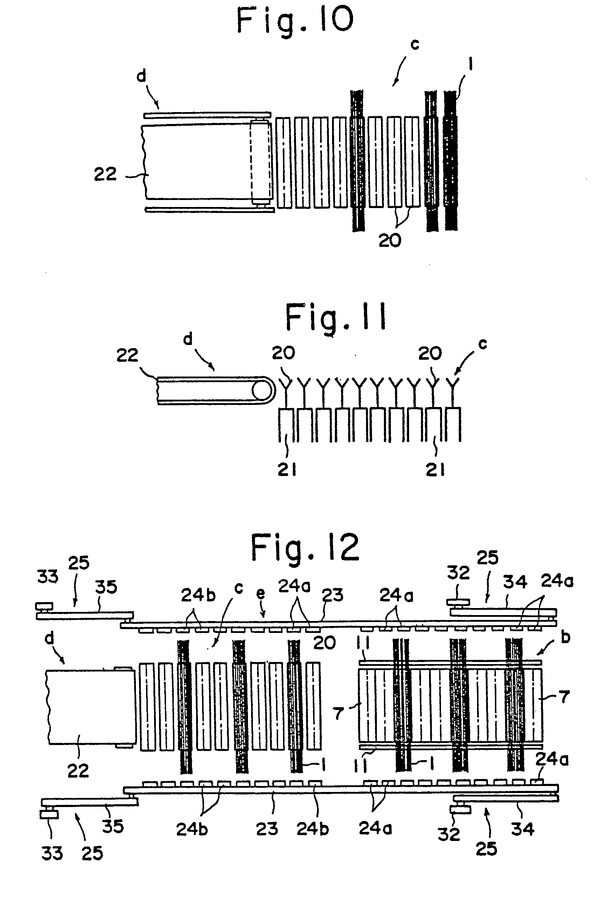

The weighing station $c$, best shown in Figs. 10 and 11, includes a plurality of equally spaced-apart weighing machines 21, 21 . . . each having a V-shaped weighing scale 20. The arrangement is such that the weight values measured by the weighing machines 21, 21 . . . are sent to an electronic computing circuit (not shown) for computing combinations. The weighing scales 20 and the receptacles 7 are the same in number, and both are so designed as to be shorter than the linear articles 1 conveyed.

The discharge station $d$, also best shown in Figs. 10 and 11, comprises a belt conveyor 22 whose width is less than the length of the articles 1 conveyed.

The dispensing, holding, weighing and discharging stations $a_2$, $b$, $c$ and $d$, respectively, are arranged continuously along a straight line along the desired conveyance direction.

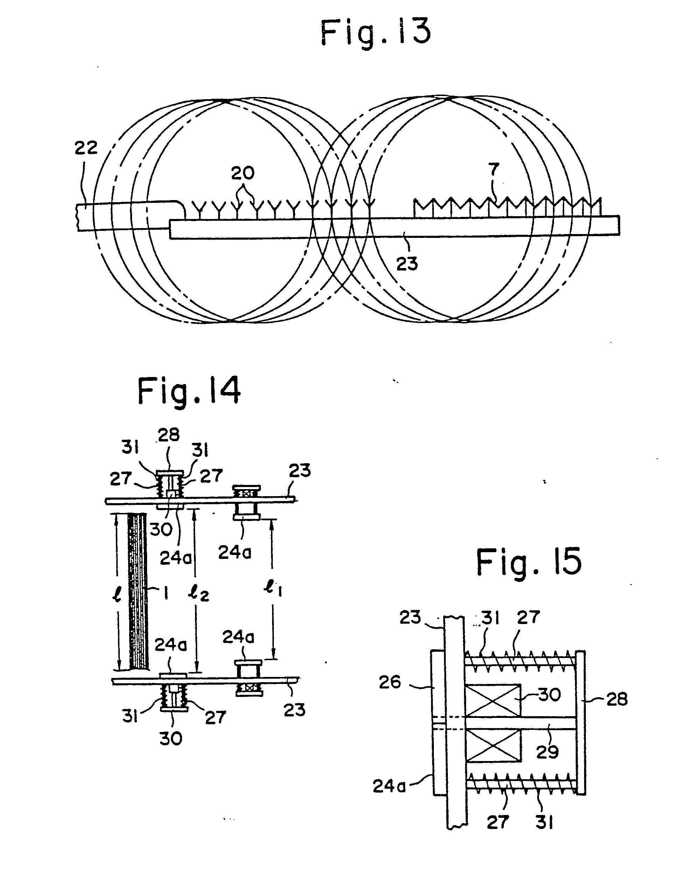

The selective conveyance station $e$, as illustrated in Figs. 12 and 13, comprises a pair of beams 23, 23 which extend alongside both the holding station $b$ and the weighing station $c$, to opposite sides thereof, take-up devices constituted by respective pairs of opposing holders 24a, 24b which are retractably mounted on the beams 23, 23 and crank mechanisms 25 for driving the beams 23, 23 cyclically. The beams 23, 23 extend in parallel and are spaced apart by a distance which is greater than the length of the linear articles 1, and have a starting disposition just below the holding station $b$ and weighing station $c$.

Each of the holders 24a as illustrated in Figs. 14 and 15 includes a V-shaped conveyor member 26 carried by supporting arms 27, 27 which pass retractably through one of the beams 23, 23 at a position corresponding to one of the temporary storage receptacles 7. An electromagnetically attracted plate 28 is attached to the outer ends of the supporting arms 27, 27, a central guide rod 29 is provided, an electromagnetic coil 30 is fixed to the guide rod 29, and springs 31, 31 are disposed on the supporting arms 27, 27. When the electromagnetic coil 30 is energized, therefore, the plate 28 is attracted toward the coil and causes the V-shaped member 26 of the holder to be thrust inwardly of its beam 23 by the supporting arms 27, 27 of the holder while compressing the springs 31, 31. When a take-up device comprising a pair of opposing holders 24a on the beams 23, 23 is actuated in this manner, the distance $l_1$ between their conveyor members 26 is made shorter than the length $l$ of the linear articles 1, as shown in Fig. 14, whereby the opposing members 26 come to be situated below the articles 1 at opposite ends thereof.

De-energizing the electromagnetic coils 30 of the take-up device allows the compressed springs 31, 31 to retract the supporting arms 27, 27 so that the conveyor members 26 of the holders concerned are moved back toward their respective beams 23. Deactuating a take-up device in this fashion moves the members 26 thereof apart to a distance $l_2$, which is greater than the length $l$ of the linear articles.

The holders 24b are similar to the holders 24a but are provided at positions corresponding to the respective weighing machines 21 of the weighing station $c$.

In use of the apparatus, the electromagnetic coils 30, 30 of the holders 24a, 24b are energized selectively so that only the take-up devices that correspond respectively to a "best" combination computed by the computing unit are actuated in any given cycle of operation, and this selective actuation is effected simultaneously in the holding station $b$ and weighing station $c$.

The beams 23, 23 are supported at each end by means of the crank mechanism 25. This is accomplished by pedestals 32, 32 and 33, 33 at the upstream and downstream ends of the beams, and crank arms 34, 34 and 35, 35 rotatably mounted at one end thereof to respective ones of the pedestals 32, 32, 33, 33, the opposite ends of the beams 23, 23 being rotatably affixed to the crank arms 34, 34 and 35, 35, respectively, at the other ends thereof. As the crank arms 34, 34, 35, 35 rotate through one complete cycle, they cause the beams 23, 23 and with them each of the take-up devices constituted by a pair of mutually-opposed holders 24a, 24a . . ., 24b, 24b . . ., to undergo a cycle of movement, the locus of which is a circle, as illustrated in Fig. 13. This circular motion is such that the holders 24a, 24a . . . of the holding station $b$ travel from points just below the holding station $b$ to points thereabove, and thence to points above the weighing station $c$. The holders then travel to points below the station $c$ before returning to their original positions just below the holding station. Similarly the holders 24b, 24b . . . of the weighing station $c$ travel from points just below the weighing station $c$ to points thereabove, and then to points above the discharge station $d$. They then travel to points below the station *d* before returning to their original positions just below the weighing station. The take-up devices (24a, 24a) of the holding station *b* are equal in number to the take-up devices (24b, 24b) of the weighing station *c*, and these two arrays of take-up devices are mutually similar so that each take-up device 24a, 24a, of the holding station *b* will be carried on a circulaar path from a position adjacent to one of the receptacles 7 to a position adjacent to a corresponding one of the weighing scales 20 in the weighing station *c*. For example, the right-hand end pair of opposing holders 24a, 24a, as seen in Fig. 12, will be carried in the course of each operating cycle from the right-hand end receptacle 7 of the holding station to the right-hand end weighing scale 20 of the weighing station.

In the operation of the apparatus described above, a feeding device (not shown) supplies the main trough 2 successively with linear articles 1 which are orientated at right angles to the direction of conveyance. The linear articles 1 are advanced along the main trough 2 (to the left in Fig. 3) by the vibratory motion of the electromagnetic feeder 4 (Fig. 4A) and fall into each of the corrugations 5 of the corrugated supports 3, 3 which have been caused to project beyond the forward edge of tha main trough 2, whereby a substantially predetermined number of the linear articles 1 are randomonly dispensed. The number of corrugations 5 projecting beyond the forward edge of the main trough 2 is preset to half the number of weighing machines 21, 21 ... provided. Thus if there are ten weighing machines, five of the corrugations will receive linear articles.

As the corrugated supports 3, 3 are being supplied with the linear articles by the dispensing operation of the main trough 2, the forward half of the array of temporary storage receptacles 7, 7 ... are released onto the supporting underlying second elevator 12 from the retaining plates 11 in the manner described above, and the second elevator 12 is then lowered to carry the released receptacles 7 downwardly along with it, this taking place at the same time as the abovementioned dispensing operation. When the second elevator 12 reaches its lowermost position, the second pushing device 13, shown in Figs. 5 and 6, pushes the lowered receptacles 7, 7 ... off the second elevator 12 and onto the sloping members 8 where the receptacles 7 are collected. The second pushing device 13 then returns to its original position, and the second elevator 12 is raised again to its uppermost position to support the remaining receptacles 7. Next, the first elevator 9 is raised to lift the receptacles 7, 7 ... from the sloping members 8, in the course of which the linear articles 1 previously deposited in the corrugations 5 of the supports 3, 3 are taken up in the respective V-shaped grooves 6 of the temporary storage receptacles 7.

Now, with the first and second elevators 9 and 12 in their uppermost positions, the retaining plates 11 release the remaining receptacles 7, and the first pushing device 10 pushes the receptacles 7, which are carrying the linear articles 1, from the first elevator 9 onto the second elevator 12, these receptacles 7 pushing the remaining, empty receptacles 7 ahead of them on the second elevator. When all of the article-carrying receptacles 7 have been pushed onto the second elevator 12, the retaining plates 11 are actuated to again retain all receptacles 7, both those that are empty and those that are carrying the linear articles 1. The first pushing device 10 is now retracted to its original position, and the first elevator 9 is lowered to its former position. When the latter takes place, the main trough 2 is again vibrated by the electromagnetic feeder 4 to dispense a fresh supply of the linear articles 1 into the proper number of corrugations 5 of the corrugated supports 3, 3. The remaining, empty receptacles 7, retained by the retaining plates 11 on the second elevator 12 are then submitted to the series of operations described above to supply them with the linear articles 1. When this second series of operations is completed, each of the temporary storage receptacles 7, 7 ... will hold a quantity of the linear articles 1, and those receptacles 7 will be aligned on the second elevator 12 while being retained by the retaining plates 11.

Next, all of the take-up devices 24a, 24a ... mounted on the beams 23, 23 in the holding station *b* are caused to project inwardly of the beams by energising the respective electromagnetic coils 30, 30 (see Figs. 12, 14 and 15). This positions the V-shaped conveyor members 26 of the holders 24a beneath the ends of the articles 1 held in corresponding ones of the temporary storage receptacles 7, 7 .... Under these conditions the crank arms 34, 34, 35, 35 are rotated to move the beams 23, 23 in the manner described above. This causes the linear articles 1 held in the receptacles 7, 7 ... to be taken up by the projecting take-up devices 24a, 24a ... and to be transferred thereby to the corresponding weighing scales 20, 20 ... of the weighing machines 21, 21 ... along the paths shown in Fig. 13. During this initial distribution of the articles 1 the beams 23, 23 are moved without the take-up devices 24b, 24b ... (corresponding to the weighing machines in the weighing station) being projected inwardly of the beams.

Initially, therefore, the contents of all of the temporary storage receptacles 7, 7 ... are carried from the holding station *b* to the weighing station *c* and transferred to the corresponding weighing machines 21, 21. Following this transfer the receptacles 7, all of which will be empty, are again submitted to the above-described series of operations to provide them with a fresh supply of the linear articles 1 and to return the recharged receptacles 7 to the second elevator 12.

When the weighing scales 20, 20 ... of the weighing machines 21, 21 ... receive the supply of articles 1 from the temporary storage receptacles 7, each weighing machine weighs the articles received in its weighing scale and sends a signal indicative of the weight value to the electronic computing circuit, not shown. This circuit computes combinations on the basis of the received weight values and selects the "best" combination; that is, the combination of weight values whose sum is equal or closest to a preset target value. More particularly, the computing circuit selects the weighing machines 21, 21 ... that give the best combination. When this has been carried out, pairs of mutually-opposed holders 24b, 24b ... in the weighing station c that correspond to the selected weighing machines 21, 21 ... are driven inwardly of the beams 23, 23, as are the corresponding pairs of holders 24a, 24a ... in the holding station b. The beams 23, 23 are then driven by the crank mechanisms 25, causing the actuated take-up devices 24b, 24b ... in the weighing station c to take up the linear articles 1, from the weighing scales 20, 20 ... of those weighing machines 21, 21 ... which have been selected as giving the best combination, and to convey those articles 1 to the belt conveyor 22 of the discharge station d where they are deposited and then delivered by the conveyor to an automatic packaging machine or the like. Simultaneously with the take-up of articles from the weighing scales 20, the beams 23, 23 cause the actuated take-up devices 24a, 24a ... in the holding station b to take-up the linear articles 1 from the temporary storage receptacles 7, 7 ... corresponding to the selected weighing machines 21, 21 ..., and to convey these articles to the weighing scales 20, 20 ... of the selected weighing machines 21, 21 ... which have just been emptied, thereby transferring the articles to those weighing scales to recharge them.

Next it is required to replenish the temporary storage receptacles 7, 7 ... just emptied by the corresponding take-up devices 24a, 24a .... It will be appreciated that these receptacles 7 to be replenished are those which correspond to the weighing scales which have themselves just been recharged. These empty receptacles 7, 7 ... are released selectively from the retaining plates 11, lowered by the second elevator 12, replenished with linear articles 1 and returned for retention by the retaining plates 11, through the aforementioned series of operations performed by the first and second pushing devices 10, 11, the first elevator 9, the main trough 2, and the corrugated supports 3, 3. Those of the receptacles 7, 7 ... that did not take part in recharging the selected weighing machines 21, 21 ... continue to be retained by the retaining plates 11 and await the next cycle. It should be noted that the corrugated supports 3, 3 which receive the articles 1 for replenishing the empty receptacles 7, 7 ... are caused to project beyond the leading edge of the main trough 2 by a number of corrugations 5 equal to the number of said empty receptacles 7. Furthermore, the weighing scales 20, 20 ... of the weighing machines 21, 21 ... that were not selected as giving the "best" combination continue to retain their linear articles 1, whose weight values will be used again in the next combination computation cycle.

The foregoing cycle of operations is repeated continually to deliver a steady supply of the linear articles from the selected weighing machines.

In the above embodiment the linear articles are supplied to and delivered from automatic weighing machines of the combinatorial type. It should be noted, however, that an apparatus embodying the present invention could be applied to the conveyance of linear articles for other purposes. Further, while the dispensing station $a_2$ has been described as using the corrugated supports 3, 3 and the holding station b as employing a plurality of separate receptacles 7 to provide respective temporary storage locations, other mechanisms deemed appropriate may be adopted.

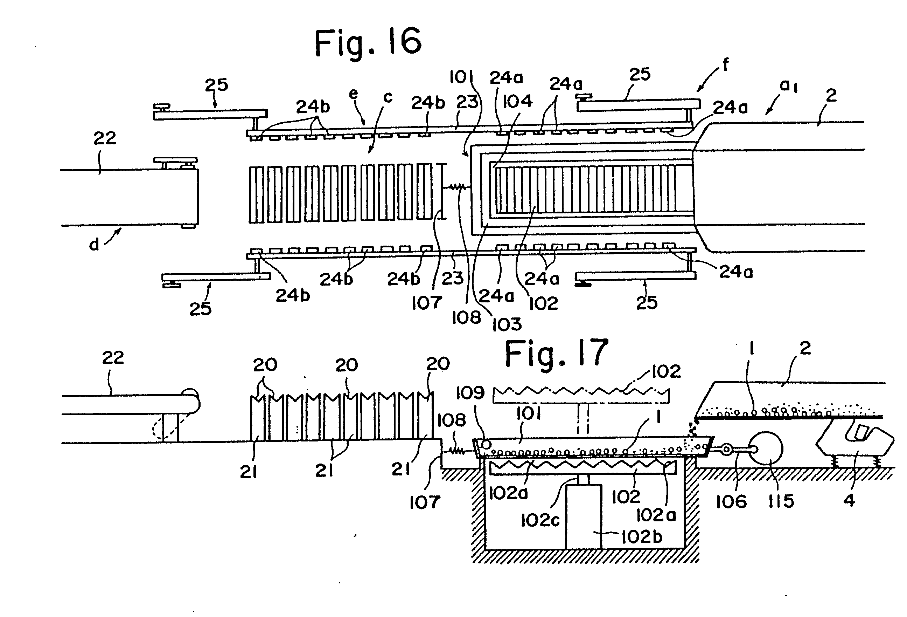

Reference will now be had to Figs. 16 and 17 to describe a second conveyance apparatus embodying the present invention.

The apparatus illustrated in Fig. 16 and 17 comprises a supply station $a_1$ for supplying linear or elongate articles 1 upon endowing them with a specific orientation, and arraying station f for collecting suitable amounts of the linear articles 1 received from the supply station $a_1$ and for arraying and levelling off these articles, a weighing station c for weighing the linear articles 1 which will be obtained from the arraying station f to perform a combinatorial weighing operation, a discharge station d for delivering linear articles which have been weighed and selected by the weighing station c to an automatic packaging machine or the like, and a selective conveyance station e for selectively delivering the linear articles 1 from the arraying station f to the weighing station c, and from the weighing station c to the discharge station d.

The supply station $a_1$, arraying station f, weighing station c and discharge station d are arranged continuously along a straight line in the conveyance direction, with the linear articles 1 being conveyed while oriented at right angles to the direction of travel. Further, the stations $a_1$, c, d, and e have the same construction as their counterparts in the first embodiment of the conveyance apparatus.

The arraying station f includes an arraying tray 101 which receives the linear articles 1 from the main trough 2, and a temporary holding tray 102 for taking up the linear articles from the arraying tray 101. The arraying tray 101 is of a width sufficient to accommodate freely the length of the linear articles 1. It is also long enough for adequate dispersion of the linear articles. The bottom (103) of the arraying tray 101 has an opening 104 formed along its entire length, but the opening is not wide enough to allow the linear articles 1 to fall through. The purpose of the opening 104 is to allow the passage of the temporary holding tray 102 therethrough, as will be described below.

The rearward end of the arraying tray 101 is pivotally coupled through a link 106 to the edge of a rotary disk 115, and the forward end is connected to the base 107 through a tensioned spring 108. Rotating the disk 115 causes the arraying tray 101 to be reciprocated back and forth with a constant amplitude owing to the action of the link 106 and a tension spring 108, whereby linear articles 1 are conveyed forwardly along the arraying tray 101 so as to be levelled off and dispersed uniformly over its entire length. Provided at a suitable location on the arraying tray 101 is a level sensor 109 such as photoelectric switch or microswitch operable to sense the level of the linear articles 1 within the tray and to halt the vibration of the electromagnetic feeder 4 when a certain level has been reached, thereby terminating the delivery of articles from the main trough 2. When the articles have been taken out of the arraying tray 101, the level sensor 109 reactuates the electromagnetic feeder 4 to resume the article feed.

The tray 102 is dimensioned to pass through the opening 104 of the arraying tray 101 but is large enough to support the linear articles 1, and the upper surface thereof is provided with a plurality of equally spaced-apart V-shaped grooves 102a at right angles to the direction of article conveyance. The tray 102 is supported by the end of a piston rod 102c belonging to a cylinder 102b, and ordinarily is positioned beneath the arraying tray 101. Extending the piston rod 102c elevates the tray 102 through the opening 104 in the arraying tray 101, lifting the linear articles 1 from the arraying tray 101. Suitable quantities of these articles thus are dispersed among each of the V-shaped grooves 102a of the tray 102.

In the operation of the second embodiment of the conveyance apparatus described above, a feeding device (not shown) supplies the main trough 2 successively with linear articles 1 which are oriented at right angles to the direction of conveyance. The main trough 2 is vibrated by the electromagnetic feeder 4 in response to a weighing start signal, whereby the articles 1 are advanced along the main trough 2 (to the left in Figs. 16 and 17) and fall into the arraying tray 101 from the forward edge of the main trough 2. The rotation of the rotary disk 115 starts at the same time as delivery of the linear articles from the main trough 2, so that the arraying tray 101 is reciprocated back and fourth to advance, level off and uniformly distribute the linear articles 1 which are being received from the main trough 2 as it vibrates. When the articles within the arraying tray 101 reach a certain level, the level sensor 109 senses the event and issues a signal which stops the vibration of the electromagnetic feeder 4 and the rotation of the rotary disk 115, thereby suspending the delivery of articles from the main trough 2 and the reciprocation of the arraying tray 101. When the arraying tray 101 stops moving, cylinder 102b is actuated to elevate the temporary holding tray 102 through the opening 104 in the arraying tray 101, at which time the tray 102 takes up the linear articles 1 from the arraying tray 101, with suitable quantities of the linear articles 1 being dispersed among each of the V-shaped grooves 102a thereof. Upward motion of the tray 102 stops when it has reached a point above the arraying tray 101.

With the tray 102 in the elevated position, the crank mechanisms 25 are actuated to move the beams 23, 23 in the manner described in connection with the first embodiment. The holders 24a, 24a . . ., 24b, 24b . . . provided on the beams 23, 23 are caused to project inwardly of the beams after they have moved upwardly past the arraying tray 101, so that the inwardly projecting holders 24a, 24 . . . pick up the linear articles 1 at the ends thereof from the V-shaped grooves 102a, 102a . . . in the tray 102 as the beams 23, 23 pass thereby, and carry the linear articles over to the weighing scales 20, 20 . . . of the corresponding weighing machines 21, 21 . . ., where the articles are deposited as the beams pass by in their downward trajectory. It should be noted that the holders 24a, 24a . . ., and 24b, 24b . . . ordinarily are caused to project inwardly of the beams in a selective manner. However, since the operation now being described is for the first or initial cycle, all of the abovementioned holders are caused to project inwardly so that the linear articles 1 on the tray 102 are delivered in their entirety to charge all of the weighing machines 21.

When the temporary holding tray 102 is emptied by the upward passage of the beams 23, 23, cylinder 102b retracts the piston rod 102c to lower the tray 102. Thenceforth the electromagnetic feeder 4 and rotary disk 115 are reactuated so that a fresh, evenly distributed and level supply of the linear articles 1 re-accumulates in the arraying tray 101 just as described above. This is followed by again elevating the tray 102 to refill its V-shaped grooves 102a, 102a. When this has been accomplished, the tray 102 "stands by" at the position above the arraying 101.

When the weighing scales 20, 20 receive the supply of articles 1 from the tray 102 as described above, each weighing machine 21, 21 weighs the articles received in its weighing scale and sends a signal indicative of the weight value to the electronic computing circuit, not shown. This circuit computes combinations on the basis of the received weight values and selects the "best" combination, that is, the combination of weight values whose sum is equal or closest to a preset target value. When this has been carried out, the computing circuit issues an electric signal in response to which all of the holders 24a, 24a . . ., 24b, 24b . . . are retracted and the beams 23, 23 are set in motion. At the instant the beams 23, 23 have moved upwardly past the arraying tray 101, the holders 24b, 24b, . . ., 24a, 24a . . ., which correspond to those weighing machines 21, 21 . . . that give the best combination are caused to project inwardly of the beams 23, 23 at the arraying and weighing stations f, c, respectively, by energizing the respective solenoids 30, shown in Figs. 14 and 15. As the beams 23, 23 move upwardly past the weighing station *c*, the inwardly projecting holders 24b, 24b . . . in the weighing station lift up the linear articles 1 from the weighing scales 20, 20 . . . of the weighing machines 21, 21 . . . which have been selected as giving the best combination, and carry the articles 1 over to the belt conveyor 22 of the discharge station *d* where they are deposited and then delivered by the conveyor 22 to an external unit. At the same time, the beams cause the inwardly projecting arraying station holders 24a, 24a . . . corresponding to the selected weighing machines 21, 21, . . . to lift the articles from the stand tray 102 and to carry them over to the just emptied weighing scales 20, 20 . . . of the weighing machines 21, 21 . . ., thereby transferring the linear articles 1 to said weighing scales to recharge them.

The weighing scales 20, 20 . . . of the weighing machines 21, 21, . . . that were not selected as giving the best combination continue to retain their linear articles 1 because the corresponding holders 24a, 24a, . . . 24b, 24b were not driven inwardly during the previous cycle. The weight values measured by these weighing machines will be used again in computing the next combination. That is, the combination computing circuit will compute the next combination using these weight values along with the weight values from those weighing machines 21, 21 . . . just re-supplied with the linear articles 1, thereby newly selecting the best combination of weights whose sum is equal or closest to the preset target value. Then, in the manner described above, the weighing machines 21, 21 selected as contributing to this combination have their linear articles 1 carried over to the belt conveyor 22 by the beams 23, 23.

At the arraying station *f*, meanwhile, the tray 102 is lowered following the previous upward passage of the beams 23, 23. The linear articles 1 which remain in the V-shaped grooves 102a of the tray 102 because they were not engaged by the holders 24a, 24a, . . . are lowered along with that tray and are returned to the arraying tray 101. Here the returned articles mix with articles newly provided by the main trough 2. Following the above-described levelling of the articles, the tray 102 is raised again to its stand-by position to take up the articles within the V-shaped grooves 102a.

The foregoing operations are repeated to enable the linear articles 1 to be weighed automatically and continuously by combinatorial computations.

An embodiment of the present invention as described can enable linear or elongate articles to be conveyed from a supply station to each of a plurality of weighing machines in a weighing station, and then delivered from the weighing machines to a discharge station, without there being any change in the specific orientation of the articles in their conveyance from the supply station to the discharge station, thereby facilitating the combinatorial weighing of linear articles such as dried noodles. Further, the described embodiments facilitate rapid weighing by effecting both supply and discharge of articles to and from the weighing machines in each operational cycle.

## Claims

1. A conveyance apparatus, for conveying elongate articles in a desired direction whilst maintaining them in a predetermined orientation relative to that direction, comprising:

input means (2, 3) for delivering respective quantities of such articles, in the said predetermined orientation, to a plurality of temporary storage locations (7) arrayed one after another in the said direction; and

a transfer mechanism (e) including support means (23) extending alongside the array of temporary storage locations and movable cyclically so that articles are taken up from those locations and conveyed in the said direction;

characterised in that a plurality of selectively actuable take-up devices (24a) are mounted on the said support means (23) and arrayed therealong in the said direction so as to be carried upwardly past the respective temporary storage locations (7) in the course of each operating cycle of the transfer mechanism, each of the take-up devices being individually switchable between an actuated condition, for engaging such articles in a temporary storage location when carried upwardly past that location, and a non-actuated condition for avoiding such engagement, whereby each operating cycle of the transfer mechanism can be used to take up and convey such articles from an individually selected set of the temporary storage locations whilst leaving such articles in the non-selected temporary storage locations.

2. An apparatus as claimed in Claim 1, wherein the said input means include a main supply trough (2) coupled to an electromagnetic vibrator (4) for causing such articles to be dispensed from the main trough.

3. An apparatus as claimed in Claim 1 or 2, wherein the said input means include an arraying tray (101) arranged to receive such articles in the said predetermined orientation, and means (115, 106) for subjecting the arraying tray to reciprocal movement in the said direction, thereby to distribute the articles more uniformly in the tray, and wherein the said temporary storage locations (102a) are provided respectively by grooves formed in an upper surface of a temporary holding tray (102) which is adapted to be raised through an opening in the said arraying tray so that respective quantities of the articles from the arraying tray are taken up in the said grooves.

4. An apparatus as claimed in any preceding claim, in combination with a plurality of weighing machines (21), having respective weighing scales (20) spaced from the temporary storage locations (7) in the said direction and arrayed one after another in that direction for respectively receiving such quantities conveyed from the temporary storage locations by the said transfer mechanism (e).

5. An apparatus as claimed in Claim 4, wherein the said weighing machines (21) are of the kind which provide outputs indicative of the weight values of the respective quantities of the said articles received by their weighing scales (20) and are connected to electronic means for employing the said outputs to select a "best" combination of the said weighing machines, the weight values of which combination are in total equal to or closest to a preselected target weight, and for causing the respective contents of the weighing scales of the weighing machines belonging to the selected combination to be passed therefrom to a discharge station (d).

6. An apparatus as claimed in Claim 5, wherein the said transfer mechanism (e) also includes a further plurality of such selectively actuable take-up devices (24b, 24b) which are mounted on the said support means (23, 23) and arrayed therealong in the said direction whilst being spaced in the said direction from the take-up devices (24a, 24a) of Claim 1 so as to be carried upwardly past the respective weighing scales (20) in the course of each operating cycle of the transfer mechanism, and which are actuated selectively by the said electronic means to take up the respective contents of the weighing scales (20) of the said selected combination in the course of an operating cycle of the transfer mechanism so that those contents are delivered by the transfer mechanism to the said discharge station (d), which is spaced in the said direction from the take-up devices (24b, 24b) of the said further plurality.

7. An apparatus as claimed in Claim 6, wherein the take-up devices (24a, 24b) are controlled by the said electronic means in such a manner that, in a given operating cycle of the transfer mechanism (e), as the contents of the weighing scales (20) of the said selected combination are delivered to the said discharge station (d) those scales are recharged respectively by the conveyance of such articles from correspondingly selected ones of the temporary storage locations (7).

**Patentansprüche**

1. Förderapparat zur Förderung länglicher Gegenstände in einer gewünschten Richtung unter Beibehaltung einer vorbestimmten Ausrichtung in Bezug auf die Förderrichtung, mit

Eingabemitteln (2, 3) zum Liefern der jeweiligen Mengen der Gegenstänge in der vorbestimmten Orientierung auf mehrere Zwischenspeicherstellen (7), die in Förderrichtung hintereinander angeordnet sind und

einem Transfermechanismus (e) der sich längs der Reihe von Zwischenspeicherstellen erstreckende Stützvorrichtungen (23) aufweist, die zyklisch so bewegbar sind, daß die Gegenstände von den Stellen abgenommen und in Förderrichtung bewegt werden,

dadurch gekennzeichnet, daß an den Stützvorrichtungen (23) mehrere selektiv betätigbare Aufnahmevorrichtungen (24a) montiert sind, die entlang den Stützvorrichtungen in Förderrichtung derart angeordnet sind, daß sie im Laufe eines jeden Arbeitszyklus des Transfermechanismus an den jeweiligen Zwischenspeicherstellen (7) vorbei nach oben getragen werden, daß jede der Aufnahmevorrichtungen einzeln zwischen einem Betätigungszustand zum Angreifen an den in einer Zwischenspeicherstelle befindlichen Gegenständen bei der Aufwärtsbewegung an der Zwischenspeicherstelle und einem Nichtbetätigungszustand, bei dem ein solches Angreifen nicht erfolgt, umschaltbar ist, wodurch jeder Arbeitszyklus des Transfermechanismus zum Aufnehmen und zur Förderung der Gegenstände von einer individuell einstellbaren Gruppe von Zwischenspeicherstellen benutzbar ist, während die Gegenstände in den nicht ausgewählten Zwischenspeicherstellen liegen bleiben.

2. Apparat nach Anspruch 1, bei welchem die Eingabemittel eine Hauptzuführrinne (2) aufweisen, die zur Ausgabe der Gegenstände mit einem elektromagnetischen Vibrator (4) gekoppelt ist.

3. Apparat nach Anspruch 1 oder 2, bei welchem die Eingabemittel ein Ausrichttablett (101) aufweisen, welches zur Aufnahme der Gegenstände in der vorbestimmten Orientierung angeordnet ist, und Mittel (115, 106), die das Ausrichttablett in eine Hin- und Herbewegung in dieser Richtung unterwerfen, um die Gegenstände auf dem Tablett gleichmäßiger zu verteilen, und bei welchem die Zwischenspeicherstellen (102a) jeweils mit Nuten versehen sind, die in der Oberseite eines Tabletts (102) zum vorübergehenden Halten gebildet sind, welches durch eine Öffnung im Ausrichttablett hindurch anhebbar ist, so daß jeweils Mengen der Gegenstände aus dem Ausrichttablett in die Nuten aufgenommen werden.

4. Apparat nach einem der vorhergehenden Ansprüche, in Kombination mit mehreren Wägemaschinen (21), die jeweils von den Zwischenspeicherstellen (7) in Förderrichtung im Abstand angeordnete Waagschalen (20) aufweisen, die jeweils die von den Zwischenspeicherstellen durch den Transfermechanismus (e) geförderten Mengen aufnehmen

5. Apparat nach Anspruch 4, bei welchem die Wägemaschinen (21) derart ausgebildet sind, daß sie Ausgangssignale liefern, die die Gewichtswerte der jeweiligen Mengen der von ihren Waagschalen (20) aufgenommenen Gegenstände angeben, und daß die Wägemaschinen (21) mit einer elektronischen Einrichtung zur Verarbeitung der Ausgangssignale zum Auswählen einer "besten" Kombination der Wägemaschinen verbunden sind, bei der die Gewichtswerte insgesamt gleich oder am nächsten einem vorbestimmten Sollgewicht sind, und zur Veranlassung der Übergabe des jeweiligen Inhalts derjenigen Waagschalen der Wägemaschinen, die zu der ausgewählten Kombination gehören, zu einer Ausgabestation (d).

6. Apparat nach Anspruch 5, bei welchem der Transfermechanismus (e) außerdem mehrere weitere selektiv betätigbare Aufnahmevorrichtung (24b, 24b) aufweist, die an der Stützvorrichtung (23, 23) befestigt, entlang dieser in Förderrichtung angeordnet und in Förderrichtung mit Abstand von den Aufnahmevorrichtungen (24a, 24a) von Anspruch 1 angeordnet sind, so daß sie im Zuge eines jeden Arbeitszyklus des Transfermechanismus an der jeweiligen Waagschale (20) vorbei nach oben getragen werden, und die von der elektronischen Einrichtung selektiv betätigbar sind, um den jeweiligen Inhalt der Waagschalen (20) der ausgewählten Kombination im Zuge eines Arbeitszyklus des Transfermechanismus aufzunehmen, so daß dieser Inhalt von dem Transfermechanismus zu der Ausgabestation (d) geliefert wird, die in Förderrichtung im Abstand von den weiteren Aufnahmevorrichtungen (24b, 24b) angeordnet sind.

7. Apparat nach Anspruch 6, bei welchem die Aufnahmevorrichtungen (24a, 24b) von der elektronischen Einrichtung derart gesteuert sind, daß in einem bestimmten Arbeitszyklus des Transfermechanismus (e), wenn der Inhalt der Waagschalen (20) der ausgewählten Kombination zu der Ausgabestation (d) geliefert wird, diese Waagschalen jeweils durch Zufuhr von Gegenständen von den entsprechend ausgewählten Zwischenspeicherstellen (7) neu beladen werden.

## Revendications

1. Appareil de transport pour transporter des objets allongés dans une direction souhaitée tout en les maintenant dans une orientation prédéterminée par rapport à cette direction, comprenant:

un moyen d'entrée (2, 3) pour fournir des quantités respectives de ces objets, dans l'orientation prédéterminée, dans plusieurs logements (7) de rangement temporaire agencés l'un après l'autre dans ladite direction; et

un mécanisme de transfert (e) comprenant un moyen de support (23) s'étendant le long de l'ensemble de logements de rangement temporaire et mobile cycliquement afin que les objects soient prélevés dans ces logements et transportés dans ladite direction;

caractérisé en ce que plusieurs dispositifs (24) de prélèvement actionnables sélectivement sont montés sur le moyen de support (23) et assemblés le long de celui-ci dans ladite direction afin d'être déplacés vers le haut au-delà des logements (7) de rangement temporaire respectifs au cours de chaque cycle de fonctionnement du mécanisme de transfert, chacun des dispositifs de prélèvement étant individuellement commutable entre un état actionné pour saisir les objets dans un logement de rangement temporaire lorsqu'il est déplacé vers le haut au-delà de ce logement, et un état non actionné pour éviter des les saisir, grâce à quoi chaque cycle de manoeuvre du mécanisme de transfert peut servir pour prélever et transporter ces objets depuis un ensemble de logements de rangement temporaire choisis individuellement tout en laissant les articles dans les logements de rangement temporaire non choisis.

2. Appareil selon la revendication 1, dans lequel le moyen d'entrée comprend une auge d'alimentation principale (2) associée à un vibreur électromagnétique (4) pour amener ces objets à être distribués depuis l'auge principale.

3. Appareil selon la revendication 1 ou 2, dans lequel le moyen d'entrée comprend un plateau de mise en ordre (101) agencé pour recevoir les objets dans l'orientation prédéterminée, et des moyens (115, 106) pour soumettre le plateau de mise en ordre à un mouvement de va-et-vient dans ladite direction, pour répartir ainsi plus uniformément les objets sur le plateau, et dans lequel les logements (102a) de rangement temporaire sont respectivement constitués par des gorges formées sur une surface supérieure de plateau (102) de retenue temporaire conçu pour être soulevé à travers une ouverture dans le plateau de mise en ordre afin que des quantités respectives d'objets du plateau de mise en ordre soient prélevés dans les gorges.

4. Appareil selon l'une quelconque des revendications précédentes, combiné à un certain nombre de balances (21) ayant des plateaux de pesée respectifs (20) espacés des logements (7) de rangement temporaire dans ladite direction et ordonnés l'un après l'autre dans cette direction pour recevoir respectivement les quantités transportées depuis les logements de rangement temporaire par le méchanisme de transfert (e).

5. Appareil selon la revendication 4, dans lequel les balances (21) sont du type produisant des signaux de sortie indicateurs des valeurs de poids des quantités respectives des objects reçus par leurs plateaux de pesée (20) et sont reliées à un moyen électronique pour utiliser les signaux afin de choisir une ''meilleure'' combinaison des balances, combinaison dont les valeurs de poids sont au total égales à ou les plus proches d'un poids repère préétabli, et pour amener le contenu respectif des plateaux de pesée des balances appartenant à la combinaison choisie à passer de ceux-ci à un poste de déchargement (d).

6. Appareil selon la revendication 5, dans lequel le mécanisme de transfert (e) comprend aussi une autre série de dispositifs de prélèvement (24b, 24b) actionnables sélectivement qui sont montés sur les moyens de support (23, 23) et ordonnés le long de ceux-ci dans ladite direction tout en étant espacés, dans ladite direction, par rapport aux dispositifs de prélèvement (24a, 24a) de la revendication 1 pour être élevés au-delà des plateaux de pesée respectifs (20) au cours de chaque cycle de fonctionnement du mécanisme de transfer, et qui sont actionnés sélectivement par le moyen électronique pour prélever les contenus respectifs des plateaux de pesée (20) de la combinaison choisie au cours d'un cycle de fonctionnement du mécanisme de transfert afin que des contenus soient acheminés par le mécanisme de transfert jusqu'au poste de déchargement (d) espacé dans ladite direction par rapport aux dispositifs de prélèvement (24b, 24b) de ladite autre série.

7. Appareil selon la revendication 6, dans lequel les dispositifs de prélèvement (24a, 24b) sont commandés par le moyen électronique de manière à ce que, lors d'un cycle de fonctionnement donné du mécanisme de transfert (e), lorsque les contenus des plateaux de pesée (20) de la combinaison choisie sont acheminés jusqu'au poste de déchargement (d), ces plateaux soient respectivement rechargés par le transport d'objects depuis des logements (7) de rangement temporaire choisis en conséquence.

# Fig. 1

# Fig. 2A

# Fig. 2B

# Fig. 3

# Fig. 4A

# Fig. 4B

# Fig. 5

# Fig. 6

# Fig. 7

# Fig. 8

# Fig. 9

# Fig. 10

# Fig. 11

# Fig. 12

# Fig.13

# Fig.14

# Fig.15

Fig. 16

Fig. 17